# EUROPÄISCHE PATENTANMELDUNG

(11) **EP 2 042 256 A1**
(43) Veröffentlichungstag der Anmeldung: **01.04.2009**
(21) Anmeldenummer: 08015494.1
(22) Anmeldetag: 02.09.2008
(51) Int. Cl.: B23K 9/08, B23K 11/00, B23K 11/06, B23K 11/11, B23K 11/14, B23K 35/38

(54) **Verfahren zum Fügen von Gegenständen**

(30) Priorität: 28.09.2007 DE 102007046709
(71) Anmelder: Linde Aktiengesellschaft, 80807 München (DE)
(72) Erfinder: Matz, Christoph, 85716 Unterschleißheim (DE)

(57) **Zusammenfassung**

Um ein Verfahren zum Fügen mindestens zweier Gegenstände mittels Widerstandsschweißen oder mittels Widerstandslöten oder mittels magnetisch bewegtem Lichtbogen, wobei die Gegenstände im zu fügenden Bereich miteinander in Kontakt gebracht werden, so weiterzubilden, dass die Gegenstände besonders stabil und/oder besonders homogen miteinander verfügt werden und dabei eine Oxidation des zu fügenden Bereichs zuverlässig verhindert wird, wird vorgeschlagen,
- dass der jeweilige Grundwerkstoff der Gegenstände zumindest im Kontaktbereich aufgeschmolzen wird und
- dass zumindest dem Kontaktbereich der Gegenstände mindestens ein Schutzgas und/oder mindestens eine Schutzgasmischung zugeführt wird, so dass das Aufschmelzen des jeweiligen Grundwerkstoffs in einer Schutzgasatmosphäre erfolgt.

## Beschreibung

### Technisches Gebiet

Die vorliegende Erfindung betrifft ein Verfahren zum Fügen mindestens zweier Gegenstände mittels Widerstandsschweißen oder mittels Widerstandslöten oder mittels magnetisch bewegtem Lichtbogen (magnetic rotating arc) gemäß dem Oberbegriff des Anspruchs 1; hierbei wird mindestens einem der Gegenstände elektrischer Strom zugeführt, und der elektrische Strom geht im Kontaktbereich vom einen Gegenstand auf den anderen Gegenstand über; der Kontaktbereich entspricht hierbei dem Bereich des beim Übergang des elektrischen Stroms auftretenden Übergangswiderstands.

### Stand der Technik

Das Verfahren des Widerstandsfügens ist ein Pressfügeverfahren, bei dem die zum Fügen erforderliche Wärme durch den Widerstand gegenüber einem durch die Fügezone fließenden elektrischen Strom erzeugt wird (vgl. zum Widerstandsschweißen zum Beispiel DIN ISO 857-1). Hierbei wird zumindest im Kontaktbereich Druck ausgeübt, insbesondere werden die Gegenstände im Kontaktbereich aneinander gepresst.

Beim Widerstandsfügen, also beim Widerstandsschweißen oder beim Widerstandslöten oder bei Mischformen aus Widerstandsschweißen und Widerstandslöten, sowie beim Fügen (Schweißen und/oder Löten) mittels magnetisch bewegtem Lichtbogen (magnetic rotating arc) an Atmosphäre treten, in Abhängigkeit vom zu verschweißenden Material, verschiedene Probleme auf:

So oxidiert der zu fügende Bereich von unlegiertem, beispielsweise hochfestem, Stahl beim Widerstandsfügen an Atmosphäre bzw. beim Fügen mittels magnetisch bewegtem Lichtbogen an Atmosphäre. Diese Oxidation der Schweißstelle bzw. Lötstelle erschwert in Verbindung mit Oberflächensilikaten nachfolgende Oberflächenbehandlungen, wie etwa Waschen, Grundieren oder Lackieren, des zu fügenden Bereichs.

Die Hauptprobleme sind hierbei ein schlechtes Benetzen der Oberfläche des oxidierten gefügten Bereichs, wodurch es unmöglich wird, diesen zu waschen, und wodurch auf den gefügten Bereich aufgetragene Lackschichten ungleichmäßig und rau sind, also eine sogenannte Orangenhaut aufweisen. Ferner tritt aufgrund der Oxidation des zu fügenden Bereichs eine Farbbeeinflussung auf, so dass sich die Schweißstelle durch mehrere Lackschichten hindurch an der Oberfläche abzeichnet.

Auch beim Fügen von hochlegiertem bzw. korrosionsbeständigem Stahl mittels Widerstandsfügen oder mittels magnetisch bewegtem Lichtbogen an Atmosphäre oxidiert die Schweißstelle bzw. Lötstelle. Ferner bilden sich Anlauffarben im Bereich um die Schweißstelle bzw. Lötstelle, wodurch die Korrosionsbeständigkeit des Werkstoffs zerstört wird.

Um die Korrosionsbeständigkeit wieder zu gewährleisten, muss eine aufwändige Nachbehandlung mit aggressiven Beizmitteln durchgeführt werden. Hierbei können Reste der Beizsäuren Korrosionen im Kontaktbereich der Gegenstände oder im Bereich eines Spalts zwischen den gefügten Bauteilen verursachen.

Das Widerstandsfügen von Aluminium ist aufgrund der hohen elektrischen Leitfähigkeit von Aluminium sehr schwierig. Um die gewünschte ohmsche Widerstandserwärmung zu erreichen, muss mit besonders hohen Schweißenergien gearbeitet werden. Gleichzeitg ist Aluminium ein sehr guter Wärmeleiter, weshalb die Schweißhitze bzw. die Löthitze in weit umliegende Bereiche abgeleitet wird.

Diese Wärmeableitung führt an der Aluminiumoberfläche der an den zu fügenden Bereich angrenzenden Bereiche zu vermehrter Oxidbildung, weil eine durch Oxidation gebildete Oxidschicht bei höheren Temperaturen beschleunigt wächst. Die Oxidschicht wird hierdurch dick sowie spröde und verliert ihre Schutzwirkungen gegen Korrosion. Außerdem führt eine ungleichmäßige Oxidschicht zu Nachteilen bei Oberflächenbehandlungen, wie zum Beispiel beim Lackieren, denn es können sich Farbabweichungen ergeben.

Im Stand der Technik ist aus der Druckschrift DE 22 46 559 A1 ein Pressschweißverfahren bekannt, bei dem eine Oxidation des zu schweißenden Metalls dadurch vermieden wird, dass die erhitzten Metallbereiche durch bzw. in eine inerte Umgebung, beispielsweise in eine Stickstoffumgebung oder in eine Argonumgebung, eingehüllt werden. Bei diesem Verfahren werden die miteinander zu verbindenden Metallstücke erhitzt und mit einer Kraft gegeneinander gepresst, die ausreicht, um eine Art von Verschmieden zu erreichen.

Ferner wird in den Druckschriten DE 699 20 770 T2, JP 05131280 A und JP 10202373 A aus dem Stand der Technik jeweils ein unter Schutzgasatmosphäre durchgeführtes Reibschweißverfahren mit Hochfrequenz-Erwärmung beschrieben.

Bisher bekannte Verfahren zum Widerstandsschweißen unter Schutzgasatmosphäre sind also das Reibschweißen, das Schmiedeschweißen und das Pressschweißen mit Hochfrequenz. Bei diesen Verfahren werden Reibung, Schmiedefeuer und Skin-Effekt bei hochfrequenten Strömen genutzt, um die Fügebereiche zur Rotglut zu erwärmen. Diese Schweißverfahren haben allesamt gemein, dass die Schmelztemperatur des Metalls nicht erreicht wird; vielmehr werden die Fügeteile im teigigen Zustand mechanisch verpresst.

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, ein Verfahren der eingangs genannten Art so weiterzubilden, dass die Gegenstände besonders stabil und/oder besonders homogen miteinander verfügt werden und dabei eine Oxidation des zu fügenden Bereichs zuverlässig verhindert wird.

Diese Aufgabe wird durch ein Verfahren mit den im Anspruch 1 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Mithin basiert die vorliegende Erfindung darauf,
- ein Widerstandsfügeverfahren oder
- ein Fügeverfahren mit magnetisch bewegtem Lichtbogen,
bei dem der jeweilige Grundwerkstoff der Gegenstände zumindest im Kontaktbereich aufgeschmolzen wird, unter Schutzgasatmosphäre, insbesondere unter kontrollierter Schutzgasatmosphäre, durchzuführen, um eine Oxidation der Werkstückoberfläche bzw. des aufgeschmolzenen Grundwerkstoffs von vorneherein auszuschließen.

Das Widerstandsschweißen bzw. das Widerstandslöten kann vorteilhafterweise mittels der Methode
- des Punktschweißens (vgl. DIN ISO 857-1) bzw. des punktförmigen Widerstandslötens oder
- des Buckelschweißens (vgl. DIN ISO 857-1) oder
- des Roll(en)nahtschweißens (vgl. DIN ISO 857-1)
erfolgen; beispielsweise kann das Widerstandsschweißen mittels der im vom DVS-Verlag herausgegebenen Merkblatt DVS 2906-1 vom Juni 2006 beschriebenen Methode des Widerstandsrollenschweißens erfolgen.

Die vorgenannten Verfahren unterscheiden sich verfahrenstechnisch in erheblichem Maße von den aus dem Stand der Technik bekannten, unter Schutzgasatmosphäre durchgeführten Reibschweißverfahren, weil beim Punktschweißen, beim Buckelschweißen und beim Roll(en)nahtschweißen sowie beim punktförmigen Widerstandslöten jeweils der Grundwerkstoff verflüssigt und in einem Schmelzbad erstarren gelassen wird. Auf diese Weise kann eine wesentlich bessere Fügverbindung erzielt werden.

Die gemäß einer vorteilhaften Ausführungsform der vorliegenden Erfindung vorgeschlagenen Widerstandsfügeverfahren [Punktschweißen, punktförmiges Widerstandslöten, Buckelschweißen und Roll(en)nahtschweißen] unterscheiden sich von den aus dem Stand der Technik bekannten, unter Schutzgasatmosphäre durchgeführten Reibschweißverfahren zudem wesentlich in der Wärmeerzeugung sowie in der Intensität der erzeugten Wärme.

Beim Punktschweissen, beim Buckelschweissen, beim Roll(en)nahtschweissen und beim punktförmigen Widerstandslöten erfolgt eine ohmsche Erwärmung durch den elektrischen Widerstand der Gegenstände oder Werkstücke und den Übergangswiderstand zwischen den Gegenständen. Die Wärmeerzeugung erfolgt somit nach dem Wirkprinzip des ohmschen Widerstands.

Ferner werden die Gegenstände im Gegensatz zum Stand der Technik nicht teigig verpresst, sondern anstelle dessen wird zumindest der Kontaktbereich bis über seine Schmelztemperatur erwärmt. Es entsteht somit mindestens ein Schmelzbad aus aufgeschmolzenem Grundwerkstoff der jeweiligen Fügepartner, das die Gegenstände, beispielsweise Bauteile oder Teile eines Bauteils, nach Abkühlung zusammenhält.

Die im vorstehenden Kapitel "Stand der Technik" genannten Probleme werden mittels des erfindungsgemäßen Verfahrens stark reduziert oder sogar ausgeschlossen. Hierdurch ergeben sich erhebliche Sparpotentiale, insbesondere weil Reinigungsvorgänge zur Entfernung von Oxiden entfallen können.

Gemäß einer besonders vorteilhaften Ausgestaltung der vorliegenden Erfindung wird das Schutzgas bzw. die Schutzgasmischung gemäß den jeweiligen Grundwerkstoffen der Gegenstände gewählt.

So ist beispielsweise zum Fügen von Aluminium, das optionalerweise legiert sein kann, die Verwendung eines Schutzgases besonders vorteilhaft, das im Wesentlichen Argon, im Wesentlichen Helium oder im Wesentlichen eine Argon-Helium-Mischung aufweist. Hierbei kann der Anteilsbereich an Argon oder an Helium bzw. an Argon-Helium-Gemisch insbesondere mindestens etwa 80 Vol.-%, beispielsweise etwa 95 Vol.-% bis etwa 100 Vol.-%, betragen.

Zum Fügen von Stahl, insbesondere von niedriglegiertem Stahl oder von unlegiertem Stahl, ist die Verwendung eines Schutzgases besonders vorteilhaft, das
- in seinem Hauptbestandteil Argon (Ar), Kohlendioxid (CO₂), Helium (He) oder Stickstoff (N₂) und
- als Nebenbestandteil Wasserstoff (H₂) oder Sauerstoff (O₂)
aufweist oder das mindestens ein Gemisch aus Argon (Ar) und/oder Kohlendioxid (CO₂) und/oder Wasserstoff (H₂) und/oder Helium (He) und/oder Stickstoff (N₂) und/oder Sauerstoff (O₂) aufweist.

Dabei wird zum Fügen von niedriglegiertem Stahl oder von Baustahl vorteilhafterweise ein Schutzgas verwendet, das
- Kohlendioxid (CO₂) in einem Anteilsbereich von etwa 10 Vol.-% bis etwa 30 Vol.-%, beispielsweise von etwa 18 Vol.-%, und
- Argon im übrigen Volumenbereich
aufweist.

Vorteilhafterweise wird also das Schutzgas bzw. die Schutzgasmischung nach den zu fügenden Werkstoffen ausgesucht, wobei das Schutzgas bzw. die Schutzgasmischung
- zum Fügen von Aluminium zweckmäßigerweise in seinem bzw. ihrem Hauptbestandteil Argon (Ar) und/oder Helium (He) und/oder
- zum Fügen von Stahl bzw. von Stählen reines Argon (Ar), reines Kohlendioxid (CO₂), reinen Wasserstoff (H₂), reines Helium (He), reinen Stickstoff (N₂), reinen Sauerstoff (O₂) oder mindestens ein Gemisch hieraus
aufweisen kann.

Unabhängig hiervon oder in Verbindung hiermit kann das Schutzgas bzw. die Schutzgasmischung einen Anteilsbereich von etwa 10 Volumenprozent (Vol.-%) bis etwa 30 Vol.-%, insbesondere von etwa 18 Vol.-%, Kohlendioxid (CO₂), aufweisen.

Ganz besonders vorteilhaft einsetzbar ist das erfindungsgemäße Verfahren beim Fügen von Stahl, insbesondere von hochlegiertem Stahl. Hierbei kann das Widerstandsschweißen beispielsweise
- mittels der im Merkblatt DVS 2902-1 vom September 2001 sowie im Merkblatt DVS 2902-4 vom Oktober 2001 beschriebenen Methode des Widerstandspunktschweißens von Stählen bis zu einer Einzeldicke von drei Millimetern und/oder
- mittels der im Merkblatt DVS 2905 vom Mai 2001 beschriebenen Methode des Buckelschweißens von Stählen und/oder
- mittels der im Merkblatt DVS 2935-1 vom September 2004 beschriebenen Methode des Widerstandspunktschweißens von Feinblechen aus niedriglegierten Stählen oder kaltgewalzten höherfesten Stählen
erfolgen.

Vorteilhafterweise kann mindestens einer der Gegenstände zumindest im zu fügenden Bereich im Wesentlichen
- Aluminium, insbesondere hochlegiertes Aluminium, niedriglegiertes Aluminium oder nicht legiertes Aluminium, und/oder
- niedriglegierten Stahl oder nicht legierten Stahl, und/oder
- beschichteten Stahl, insbesondere beschichtetes Stahlblech, und/oder
- hochfesten Stahl
   aufweisen.
   Das erfindungsgemäße Verfahren kann also vorteilhafterweise zum Fügen
- von unlegierten, beispielsweise auch hochfesten oder beschichteten, Stählen,
- von nichtrostenden Stählen von oder hochlegierten Stählen oder
- von Aluminium(legierungen)
   eingesetzt werden.

Beispielsweise kann das Verfahren gemäß der vorliegenden Erfindung mittels der im Merkblatt DVS 2932 (Teil 3) vom April 1986 beschriebenen Methode des Widerstandspunktschweißens und/oder des Widerstandsroll(en)nahtschweißens von Aluminium und von Aluminiumlegierungen von etwa 0,35 Millimeter bis etwa 3,5 Millimeter Einzeldicke erfolgen.

Gemäß einer vorteilhaften Weiterbildung der vorliegenden Erfindung können auch Gegenstände oder Werkstoffe aus jeweils artfremden Grundwerkstoffen miteinander verfügt werden. Beispielsweise kann unlegierter Stahl an hochlegierten Stahl gefügt werden oder Aluminium(legierung) an Stahl(legierung).

Ferner können vorteilhafterweise mittels der vorliegenden Erfindung beschichtete Stahlbleche miteinander verfügt werden.

Zudem erweist sich die vorliegende Erfindung besonders vorteilhaft beim Verfügen von ungleich dicken Gegenständen.

Die vorliegende Erfindung betrifft schließlich die Verwendung mindestens eines Schutzgases und/oder mindestens einer Schutzgasmischung in einem Verfahren gemäß der vorstehend dargelegten Art.

## Patentansprüche

1. Verfahren zum Fügen mindestens zweier Gegenstände mittels Widerstandsschweißen oder mittels Widerstandslöten oder mittels magnetisch bewegtem Lichtbogen, wobei die Gegenstände im zu fügenden Bereich miteinander in Kontakt gebracht werden,
**dadurch gekennzeichnet,**
- **dass** der jeweilige Grundwerkstoff der Gegenstände zumindest im Kontaktbereich aufgeschmolzen wird und
- **dass** zumindest dem Kontaktbereich der Gegenstände mindestens ein Schutzgas und/oder mindestens eine Schutzgasmischung zugeführt wird, so dass das Aufschmelzen des jeweiligen Grundwerkstoffs in einer Schutzgasatmosphäre erfolgt.

2. Verfahren gemäß Anspruch 1, **dadurch gekennzeichnet, dass** das Widerstandsschweißen oder das Widerstandslöten mittels der Methode
- des Punktschweißens oder des punktförmigen Widerstandslötens oder
- des Buckelschweißens oder
- des Rollnahtschweißens oder Rollennahtschweißens erfolgt.

3. Verfahren gemäß Anspruch 1 oder 2, **dadurch gekennzeichnet, dass** der Grundwerkstoff mindestens eines der Gegenstände zumindest im zu fügenden Bereich
- im Wesentlichen aus Aluminium, insbesondere aus hochlegiertem Aluminium, aus niedriglegiertem Aluminium oder aus nicht legiertem Aluminium, und/oder
- im Wesentlichen aus Stahl, insbesondere aus hochlegiertem Stahl, aus niedriglegiertem Stahl oder aus nicht legiertem Stahl, und/oder
- im Wesentlichen aus beschichtetem Stahl, insbesondere aus beschichtetem Stahlblech, und/oder
- im Wesentlichen aus hochfestem Stahl gebildet ist.

4. Verfahren gemäß mindestens einem der Ansprüche 1 bis 3, **dadurch gekennzeichnet, dass** das Schutzgas bzw. die Schutzgasmischung in Abhängigkeit vom Grundwerkstoff im zu fügenden Bereich zumindest eines der Gegenstände ausgewählt wird, insbesondere
- dass zum Fügen von Aluminium das Schutzgas bzw. die Schutzgasmischung in seinem bzw. ihrem Hauptbestandteil Argon (Ar) und/oder Helium (He) aufweist und/oder
- dass zum Fügen von Stahl, insbesondere von niedriglegiertem Stahl oder von nicht legiertem Stahl, das Schutzgas bzw. die Schutzgasmischung in seinem bzw. ihrem Hauptbestandteil Argon (Ar) und/oder Kohlendioxid (CO₂) und/oder Wasserstoff (H₂) und/oder Helium (He) und/oder Stickstoff (N₂) und/oder Sauerstoff (O₂) oder mindestens ein Gemisch hieraus aufweist.

5. Verfahren gemäß mindestens einem der Ansprüche 1 bis 4, **dadurch gekennzeichnet, dass** das Schutzgas bzw. die Schutzgasmischung zum Fügen von niedriglegiertem Stahl oder von Baustahl Kohlendioxid (CO₂) in einem Anteilsbereich von etwa 10 Vol.-% bis etwa 30 Vol.-%, insbesondere von etwa 18 Vol.-%, aufweist.

6. Verfahren gemäß mindestens einem der Ansprüche 1 bis 5, **dadurch gekennzeichnet, dass** die Gegenstände zumindest im zu fügenden Bereich
- unterschiedlich dick sind und/oder
- jeweils aus artfremden Grundwerkstoffen gebildet sind, beispielsweise
-- aus unlegiertem Stahl und aus hochlegiertem Stahl oder
-- aus Aluminium und aus Stahl.

7. Verwendung mindestens eines Schutzgases und/oder mindestens einer Schutzgasmischung in einem Verfahren gemäß mindestens einem der Ansprüche 1 bis 6.

8. Verwendung gemäß Anspruch 7 zum Fügen
- von Aluminium, insbesondere von hochlegiertem Aluminium, von niedriglegiertem Aluminium oder von nicht legiertem Aluminium, und/oder
- von Stahl, insbesondere von hochlegiertem Stahl, von niedriglegiertem Stahl oder von nicht legiertem Stahl, und/oder
- von beschichtetem Stahl, insbesondere von beschichtetem Stahlblech, und/oder
- von hochfestem Stahl.

9. Verwendung gemäß Anspruch 7 oder 8 zum Fügen von niedriglegiertem Stahl oder von Baustahl, **dadurch gekennzeichnet, dass** das Schutzgas im Wesentlichen
- Kohlendioxid (CO₂) in einem Anteilsbereich von etwa 10 Volumenprozent (Vol.-%) bis etwa 30 Vol.-%, insbesondere von etwa 18 Vol.-%, und
- Argon im übrigen Volumenbereich aufweist.

10. Verwendung gemäß mindestens einem der Ansprüche 7 bis 9 zum Fügen von Aluminium, **dadurch gekennzeichnet, dass** das Schutzgas im Wesentlichen, insbesondere in einem Anteilsbereich von mindestens etwa 80 Vol.-%, beispielsweise in einem Anteilsbereich von etwa 95 Vol.-% bis etwa 100 Vol.-%,
- Argon oder
- Helium oder
- Argon und Helium aufweist.
